# EUROPÄISCHE PATENTANMELDUNG

(11) **EP 1 310 153 A1**
(43) Veröffentlichungstag der Anmeldung: **14.05.2003**
(21) Anmeldenummer: 01204263.6
(22) Anmeldetag: 09.11.2001
(51) Int. Cl.: A01F 15/07

(54) **Vorrichtung zum Umhüllen von Körpern, insbesondere von Erntegutballen**

(71) Anmelder: Lely Enterprises AG, 6300 ZUG (CH)
(72) Erfinder: Ramm, Christoph, 38106 Braunschweig (DE)
(74) Vertreter: Corten, Maurice Jean F.M.

(57) **Zusammenfassung**

Die Erfindung betrifft eine Vorrichtung zum Umhüllen von Körpern, insbesondere von Erntegutballen (1) aus Heu, Stroh oder angewelktem Grüngut, wobei während des Umhüllvorganges zumindest eine Umhüllmaterialbahn von einem Umhüllmaterialvorrat (8) abgezogen wird und eine Einrichtung vorgesehen ist, welche einen Riß der Umhüllmaterialbahn oder einen Aufbrauch des Umhüllmaterialvorrats (8) signalisiert. Um die Vorrichtung zu verbessern und eine einfache und insbesondere kostengünstigere Lösung zu entwickeln, wird erfindungsgemäß vorgeschlagen, daß dem Umhüllmaterialbahnabschnitt (18) zwischen Umhüllmaterialvorrat (8) und dem Körper (1) wenigstens ein optischer (14, 15), ein Ultraschall-Sensor oder ein Sensor für elektromagnetische Wellen/Felder anderer Frequenzbereiche zugeordnet und ortsfest angeordnet ist.

## Beschreibung

Die Erfindung betrifft eine Vorrichtung zum Umhüllen von Körpern, insbesondere von Erntegutballen nach dem Oberbegriff des Patentanspruches 1.

Die vorstehend beschriebene Vorrichtung läßt sich der DE 200 15 540 U1 entnehmen. Hierbei ist ein Schaltelement am Dreharm angeordnet. Dieses Schaltelement schwenkt bei Folienabriß oder Folienende radial nach außen und wirkt dabei mit einem stationär am Umlaufkreis des Dreharmes angeordneten Signalgeber zusammen. Von Vorteil ist, daß diese Vorrichtung keine Energieübertragung durch die obere Dreharmlagerung benötigt, da der Signalgeber ortsfest angeordnet ist. Nachteilig ist jedoch die Funktionsunsicherheit bei schwankenden Folienspannungen. Ferner werden relativ viele Spezialteile benötigt.

Weitere Ausführungsformen offenbaren folgende Anmeldungen: DT 2435785 A1, EP 0924133 A1 und WO 98/41450. Darüber hinaus sind Folieneinrißanzeigen bei Rundballenpressen-Wickler-Kombinationen Typ Rollant 250RC UNIWRAP des Fabrikats Claas und beispielsweise Typ 65040 Kombi Göweil auf dem Markt. Letztgenannte benötigen relativ aufwendige Energieübertragungssysteme zwischen Dreharm und Gestell.

Der Erfindung liegt die Aufgabe zugrunde, die eingangs beschriebene Vorrichtung zu verbessern und eine einfache und insbesondere kostengünstigere Lösung zu entwickeln.

Diese Aufgabe wird erfindungsgemäß dadurch gelöst, daß dem Umhüllmaterialbahnabschnitt zwischen Umhüllmaterialvorrat und dem Körper wenigstens ein optischer, ein Ultraschallsensor oder ein Sensor für elektromagnetische Wellen/Felder anderer Frequenzbereiche zugeordnet und ortsfest angeordnet ist

Die erfindungsgemäße Lösung arbeitet unabhängig von der Spannung des Umhüllmaterials, so daß nicht nur Durchrisse der Umhüllmaterialbahn, sondern auch Löcher durch Überstretchung der Folie oder Teilrisse erkannt werden können, was alle anderen bekannten Einrichtungen nicht können. Bewegliche Teile entfallen durch den ortsfesten Anbau der Sensoren, so daß eine Einstellung leicht möglich ist. Es kommen nur kostengünstige Standardelemente zur Anwendung, die sich besonders vorteilhaft in eine elektronische Maschinensteuerung integrieren lassen.

Eine vorteilhafte Ausführungsform besteht darin, daß der optische Sensor von einer Einweglichtschranke gebildet wird mit Empfänger auf der einen Seite des Umhüllmaterialbahnabschnittes und in Flucht zum Empfänger angeordneten Sender auf der anderen Seite des Umhüllmaterialbahnabschnittes. Aufgrund der Staubunempfindlichkeit haben sich Infrarotsender gut bewährt.

Eine baulich besonders einfache Ausführungsform stellt die Verwendung eines Reflextasters dar, welcher mit reflektiertem Licht oder reflektierten Schallwellen arbeitet und dadurch erkennt, ob ein Umhüllmaterialbahnabschnitt vorhanden ist. Alternativ können auch Röntgenstrahlen oder andere Wellenlängen des Lichts verwendet werden.

Für besonders staubigen Betrieb ist vorgesehen, daß einem oder mehreren Sensor/en eine Reinigungsvorrichtung zugeordnet ist.

Weitere Vorteile der Erfindung ergeben sich aus den übrigen Unteransprüchen und aus der nachfolgenden Beschreibung eines Ausführungsbespieles anhand einer einzigen, dieses schematisch dargestellenden Figur.

Die nachstehende Figur zeigt ein Ballenwickelgerät bekannter Bauart zum Umhüllen eines Erntegutballens 1 mit Folie 2. Das Ballenwickelgerät besteht im wesentlichen aus einem feststehenden Wickeltisch 3 mit antreibbaren Förderelementen 4 und einer Wickelvorrichtung mit einem Dreharm 5, der um eine vertikale Drehachse 6 drehbar an einem Gestell 7 gelagert ist und am unteren Ende eine Folienvorratsrolle 8 als Umhüllmaterialvorrat sowie eine Stretcheinheit 9 trägt.

Während des Umhüllungsvorganges wird die Vorratsrolle 8 in einer Drehbewegung mit einer Drehrichtung 10 um die vertikale Achse 6 um den sich um eine horizontale Rotationsachse 12 mit einer Drehrichtung 13 drehenden Erntegutballen 1 herumgeführt, wobei die Folie 2 über die Stretcheinheit 9 von der Vorratsrolle 8 abgezogen und um den Erntegutballen 1 gewickelt wird. Der Antrieb des Ballens 1 und der Antrieb des Dreharmes 5 arbeiten in einem bestimmten Übersetzungs-verhältnis zueinander, so daß sich die um den Ballen 1 gewickelten Folienlagen durch das gleichzeitige Drehen von Wickelvorrichtung und Ballen 1 überlappen.

Neu ist die Anordnung einer Lichtschranke 11, bestehend aus einem ortsfest am Wickeltisch 3 angeordneten Sender 14 und einem ortsfest am Gestell 6 angeordneten Empfänger 15. Beide Sensoren 14, 15 sind in einer Fluchtlinie 16 angeordnet, welche in einer bestimmten Position des Dreharmes 5, die mit der Zahl 17 gekennzeichnet ist, den gespannten Folienabschnitt 18 zwischen Vorratsrolle 8 und Ballen 1 durchläuft. Der Folienriß oder der Aufbrauch der Vorratsrolle 8 wird dadurch erkannt, daß der Lichtstrahl zwischen Sender 14 und Empfänger 15 nicht unterbrochen wird. Bei unterbrochenem Lichtstrahl zwischen Sender 14 und Empfänger 15 dieser Lichtschrankenanordnung 14, 15 befindet sich der Folienabschnitt 18 zwischen Ballen 1 und Vorratsrolle 8 in gespanntem Zustand. Vorzugsweise wird infrarotes (unsichtbares) Licht ausgesendet. Das Licht kann aber auch mit einer Leuchtdiode, einem Laser oder einem anderen Leuchtmittel erzeugt werden. Alternativ können auch Sensoren verwendet werden, die beispielsweise mit Schallwellen oder Röntgenstrahlen arbeiten.

Zur Festlegung der Auswerteposition 17 der Lichtschrankenanordnung 14, 15 dient ein Positionssensor 19, der am Gestell 7 angeordnet ist und mit Schaltflächen 20 am Dreharm 5 zusammenwirkt.

Sender 14, Empfänger 15 und der Positionssensor 19 stehen mit einer Auswerteelektronik 21 und/oder Steuereinheit für die Maschinensteuerung sowie einer Anzeige-/Bedieneinheit 22 für die Bedienperson in Wirkverbindung. Die Lichtschrankenanordnung 14, 15 kann während des gesamten Betriebes ständig energieversorgt sein. Der Auswertebereich läßt sich durch den Positionssensor 19 voreinstellen. In der dargestellten Dreharmposition 17 aktiviert der Positionssensor 19 beispielsweise die Auswertung der Lichtschrankensignale, so daß bei Folienriß oder -aufbrauch ein Signal erfolgt. Nach Drehung des Dreharmes 5 um etwa 180° in Richtung des Pfeiles 10 aktiviert der Positionssensor 19 erneut eine Auswertung, jedoch zur Prüfung, ob Sender 14/Empfänger 15 einwandfrei funktionieren oder verschmutzt sind. In der ersten Dreharmposition 17 kann beispielsweise ein Alarmsignal über die Anzeige- /Bedieneinheit 22 erfolgen oder ein Signal an die Maschinensteuerung den Umhüllvorgang sofort zu unterbrechen. In der zweiten, nicht dargestellten Dreharmposition, kann das Signal an die Anzeige/Bedieneinheit 22 gesendet werden oder auch zur Aktivierung einer Reinigungsvorrichtung 23 für Sender 14/ Empfänger 15 verwendet werden, die beispielsweise als Luftdüse, Wasserdüse oder mechanisches Reinigungselement ausgestaltet sein kann. Alternativ zur Auswertung der zweiten Dreharmposition können auch Sender 14 /Empfänger 15 mit Verschmutzungsmeldern verwendet werden, die bei drohender Verschmutzung ein Alarmsignal senden oder die Reinigungsvorrichtung 23 aktivieren.

Die Erfindung und deren Vorteile lassen sich in gleicher Weise auch an sogenannten Drehtischsystemen realisieren, bei denen der Ballen gleichzeitig um eine vertikale und eine horizontale Achse dreht. Hierzu bietet sich an, nur einen einzigen Sensor, nämlich einen Reflextaster nach dem Lichtwellen- oder Schallwellenprinzip zu verwenden.

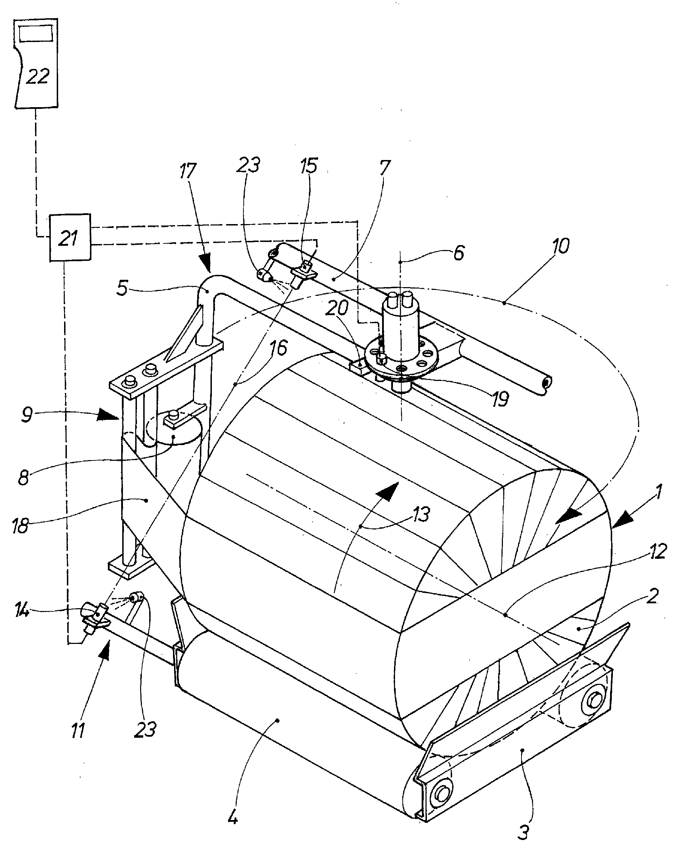

## Patentansprüche

1. Vorrichtung zum Umhüllen von Körpern, insbesondere von Erntegutballen (1) aus Heu, Stroh oder angewelktem Grüngut, wobei während des Umhüllvorganges zumindest eine Umhüllmaterialbahn von einer Vorratsrolle (8) abgezogen wird und eine Einrichtung vorgesehen ist, welche einen Riß der Umhüllmaterialbahn oder einen Aufbrauch der Vorratsrolle (8) signalisiert, **dadurch gekennzeichnet, daß** dem Umhüllmaterialbahnabschnitt (18) zwischen Vorratsrolle (8) und dem Erntegutballen (1) wenigstens ein optischer (14, 15) oder ein Ultraschall-Sensor zugeordnet ist.

2. Vorrichtung nach Anspruch 1, **dadurch gekennzeichnet, daß** der optische Sensor von einer Einweglichtschranke gebildet wird mit Empfänger (14) auf der einen Seite des Umhüllmaterialbahnabschnittes (18) und in Flucht (16) zum Empfänger (14) angeordneten Sender (15) auf der anderen Seite des Umhüllmaterialbahnabschnittes (18).

3. Vorrichtung nach Anspruch 1, **dadurch gekennzeichnet, daß** der optische Sensor eine Spiegelreflexlichtschranke ist, mit Sender und Empfänger auf der einen Seite des Umhüllmaterialbahnabschnittes (18) und Reflektor auf der anderen Seite des Umhüllmaterialbahnabschnittes (18).

4. Vorrichtung nach Anspruch 1, **dadurch gekennzeichnet, daß** als optischer Sensor ein Reflextaster dient, welcher mit reflektiertem Licht arbeitet und erkennt, ob ein Umhüllmaterialbahnabschnitt (18) vorhanden ist oder nicht.

5. Vorrichtung nach Anspruch 1, **dadurch gekennzeichnet, daß** wenigstens ein Ultraschallsensor auf den Umhüllmaterialbahnabschnitt (18) zwischen Vorratsrolle (8) und Erntegutballen (1) gerichtet ist.

6. Vorrichtung nach einem der vorhergehenden Ansprüche, **dadurch gekennzeichnet, daß** ein/oder mehrere Sensor/-en (14, 15) mit Verschmutzungsmeldern versehen ist/sind.

7. Vorrichtung nach einem der vorhergehenden Ansprüche, **dadurch gekennzeichnet, daß** einem oder mehreren Sensor/-en (14, 15) eine Reinigungsvorrichtung (23) zugeordnet ist/sind.

8. Vorrichtung nach einem oder mehreren der vorhergehenden Ansprüche, **dadurch gekennzeichnet, daß** ein oder mehrere Sensor/-en (14, 15) direkt oder indirekt mit einer Auswerteelektronik (21) und/oder Steuereinheit für die Maschinensteuerung sowie einer Anzeige-/Bedieneinheit (22) in Wirkverbindung steht/stehen.

9. Vorrichtung nach einem oder mehreren der vorhergehenden Ansprüche, **dadurch gekennzeichnet, daß** die Vorratsrolle (8) an einem den Erntegutballen (1) während des Umhüllungsvorganges umkreisenden Dreharm (5) angeordnet ist und die Auswertung auf Riß des Umhüllmaterialbahnabschnittes (18) oder Aufbrauch der Vorratsrolle (8) erfolgt, wenn der Umhüllmaterialbahnabschnitt (18) den Arbeitsbereich einer oder mehrerer Sensoren (14, 15) durchläuft.

10. Vorrichtung nach einem oder mehreren der vorhergehenden Ansprüche, **dadurch gekennzeichnet, daß** die Prüfung auf Verschmutzung einer oder mehrerer Sensoren (14, 15) wenigstens einmal während eines Umlaufes des Dreharmes (5) in einer Position erfolgt, in der der Arbeitsbereich des oder der betreffenden Sensoren (14, 15) völlig frei von Gegenständen oder Umhüllbahnmaterial ist.

11. Vorrichtung nach Anspruch 6 und 7 oder 10, **dadurch gekennzeichnet, daß** die Reinigungsvorrichtung (23) manuell oder automatisch in Abhängigkeit von Verschmutzungsgrad aktivierbar ist.

12. Vorrichtung nach einem oder mehreren der vorhergehenden Ansprüche, **gekennzeichnet durch** einen Positionssensor (19, 20) für den Dreharm (5) und/oder ein Zeitglied, welcher/welches wenigstens mir der Auswerteelektronik (21) einer oder mehrerer Sensoren (14, 15) in Wirkverbindung steht.
